# EUROPEAN PATENT APPLICATION

(11) **EP 4 269 339 A1**
(43) Date of publication of application: **01.11.2023**
(21) Application number: 21911123.4
(22) Date of filing: 22.12.2021
(51) Int. Cl.: C01B 32/28

(54) **METHOD FOR PRODUCING NANODIAMOND DISPERSION COMPOSITION AND NANODIAMOND DISPERSION COMPOSITION**

(30) Priority: 25.12.2020 JP 2020216367
(71) Applicant: Daicel Corporation, Osaka 530-0011 (JP)
(72) Inventor: NISHIKAWA, Masahiro, Tokyo 108-8230 (JP); LIU, Ming, Tokyo 108-8230 (JP)
(74) Representative: Grünecker Patent- und Rechtsanwälte PartG mbB
(86) International application number: PCT/JP2021/049034
(87) International publication number: WO 2022/138986

(57) **Abstract**

Provided is a method for producing a nanodiamond dispersion composition, the method capable of easily producing a nanodiamond dispersion composition having the reduced number of coarse particles mixed therein. Another object of the present disclosure is to provide a nanodiamond dispersion composition having the reduced number of coarse particles mixed therein, and containing nanodiamond particles having an organic part. A method for producing a nanodiamond dispersion composition including subjecting a crude nanodiamond dispersion composition containing nanodiamond particles and a dispersion medium to centrifugation, separating a supernatant obtained in the centrifugation into a plurality of layers to obtain nanodiamond dispersion compositions each corresponding to each of the plurality of layers, and observing one or more of the nanodiamond dispersion compositions obtained in the separating, using a microscope, to obtain a classified and purified nanodiamond dispersion composition in which the number of nanodiamond particles having a particle size of 20 nm or greater in a microscopic field of view of 1 µm² is smaller than that in the crude nanodiamond dispersion composition.

## Description

### Technical Field

The present disclosure relates to a method for producing a nanodiamond dispersion composition and a nanodiamond dispersion composition. The present application claims priority to JP 2020-216367 filed in Japan on December 25, 2020, the contents of which are incorporated herein by reference.

### Background Art

Nano-sized fine substances are known to have novel characteristics that cannot be achieved in a bulk state. For example, nanodiamond particles (i.e., nano-sized diamond particles) exhibit mechanical strength, a high refractive index, thermal conductivity, insulating properties, antioxidation properties, and an action of promoting the crystallization of resins, and the like. However, nanodiamond particles typically have large proportions of surface atoms, a sum of van der Waals forces that can act between surface atoms of adjacent particles is strong, and aggregation tends to occur. In addition, in the case of nanodiamond particles, Coulomb interaction between crystalline surfaces of adjacent crystals may contribute to agglutination, which is a phenomenon where particles form a significantly firm cluster. Thus, it was extremely difficult to disperse nanodiamond particles to be in a state of primary particles in an organic solvent or in a resin. Therefore, the surface of nanodiamond particles is modified so as to impart dispersibility to the nanodiamond particles to suppress aggregation.

For example, surface-modified nanodiamonds in which a polyglycerin chain is introduced into the surfaces of nanodiamond particles are known to have excellent solubility or dispersibility in water or a polar organic solvent (see Patent Document 1).

A dispersion composition of nanodiamond particles may contain coarse particles even when it is excellent in dispersibility. For example, even with a measurement of dispersed particle sizes by dynamic light scattering (DLS) analysis, it is difficult to confirm the peak for determining the particle sizes of coarse particles, if an amount of the coarse particles is very small. As methods for separately obtaining nanodiamond having a smaller particle size from such a dispersion composition, methods disclosed in Non-Patent Documents 1 and 2 are known. Non-Patent Document 1 describes a method of performing air oxidation at 520°C and then performing centrifugation. Non-Patent Document 2 describes a method of performing centrifugation on an aqueous dispersion of nanodiamond particles mixed with polyethylene glycol in an amount substantially equal to the aqueous dispersion.

### Citation List

### Patent Document

Patent Document 1: JP 2012-82103 A

### Non-Patent Literature

Non-Patent Document 1: "High-yield fabrication and properties of 1.4 nm nanodiamonds with narrow size distribution", [online], Dec. 2, 2016, Scientific Reports, [search Dec. 25, 2020], Internet <URL: https://www.nature.com/articles/srep38419>
Non-Patent Document 2: Superlattices and Microstructures, 2018, Vol. 113, p. 204-212

### Summary of Invention

### Technical Problem

However, even when the dispersed particle size is small, the mixing of coarse particles into the dispersion is not necessarily reduced. In addition, the method of Non-Patent Document 1 requires performing air oxidation at a high temperature of 520°C, which requires time and labor, making the process complicated. Further, since the treatment is performed at a high temperature of 520°C, when a surface-modified nanodiamond having an organic moiety such as a polyglycerin chain or a polyoxyalkylene chain is treated, the organic moiety disappears. In the method of Non-Patent Document 2, since it is necessary to add a large amount of polyethylene glycol, a large amount of unnecessary components may be mixed into the obtained dispersion, and coarse particles are not removed sufficiently in some cases.

An object of the present disclosure is to provide a method for producing a nanodiamond dispersion composition, the method capable of easily producing a nanodiamond dispersion composition having the reduced number of coarse particles mixed in the dispersion. Another object of the present disclosure is to provide a nanodiamond dispersion composition having reduced number of coarse particles mixed therein, and containing nanodiamond particles having an organic part.

### Solution to Problem

As a result of diligent studies to achieve the above object, the inventors of the present disclosure have found that a nanodiamond dispersion composition in which mixing of coarse particles is reduced can be easily obtained by performing centrifugation on a nanodiamond dispersion composition, separating the obtained supernatant into a plurality of layers to obtain nanodiamond dispersion compositions each corresponding to each of the plurality of layers, and observing one or more of the separately obtained nanodiamond dispersion compositions with a microscope. The present invention relates to what has been completed based on these findings.

That is, the present disclosure provides a method for producing a nanodiamond dispersion composition including:
subjecting a crude nanodiamond dispersion composition containing nanodiamond particles and a dispersion medium to centrifugation;
separating a supernatant obtained in the centrifugation into a plurality of layers to obtain nanodiamond dispersion compositions each corresponding to each of the plurality of layers; and
observing one or more of the nanodiamond dispersion compositions obtained in the separating, using a microscope, to obtain a classified and purified nanodiamond dispersion composition in which the number of nanodiamond particles having a particle size of 20 nm or greater in a microscopic field of view of 1 µm² is smaller than the number of nanodiamond particles having a particle size of 20 nm or greater in a microscopic field of view of 1 µm² in the crude nanodiamond dispersion composition.

The number of the nanodiamond particles having a particle size of 20 nm or greater in the classified and purified nanodiamond dispersion composition is preferably 20 or less.

The nanodiamond particles preferably include nanodiamond particles whose surfaces are modified with a group containing a polyglycerin chain and/or a polyoxyalkylene chain.

The dispersion medium preferably contains water.

The present disclosure also provides a nanodiamond dispersion composition including:
nanodiamond particles whose surfaces are modified with a group containing a polyglycerin chain and/or a polyoxyalkylene chain; and
water as a dispersion medium,
wherein
the nanodiamond particles are dispersed in the water, and
the number of nanodiamond particles having a particle size of 20 nm or greater in a microscopic field of view of 1 µm² is 20 or less when the nanodiamond dispersion composition is observed with a microscope.

### Advantageous Effects of Invention

With the method for producing a nanodiamond dispersion composition according to the present disclosure, a nanodiamond dispersion composition in which mixing of coarse particles is reduced can be easily obtained. In addition, in the production method, since it is not necessary to subject the nanodiamond dispersion composition to a high-temperature treatment, the method can produce a nanodiamond dispersion composition in which mixing of coarse particles is reduced even when the nanodiamond dispersion composition has an organic part. Thus, the resulting nanodiamond dispersion composition can be applied to a living body into which introduction of coarse particles is not allowed.

### Brief Description of Drawings

FIG. 1 is a schematic view showing a nanodiamond dispersion composition obtained by centrifugation.
FIG. 2 is a microscopic image of a nanodiamond dispersion composition 1a obtained in Example 1 in a field of view of 1 µm² of a TEM.
FIG. 3 is a microscopic image of a nanodiamond dispersion composition 1c obtained in Example 1 in a field of view of 1 µm² of a TEM.
FIG. 4 is a microscopic image of a nanodiamond dispersion composition 1e obtained in Example 1 in a field of view of 1 µm² of a TEM.
FIG. 5 is a microscopic image of a precipitated layer 2 obtained in Example 1 in an aqueous dispersion in a field of view of 1 µm² of a TEM.

### Description of Embodiments

### [Method for Producing Nanodiamond Dispersion Composition]

A method for producing a nanodiamond dispersion composition according to an embodiment of the present disclosure includes subjecting a crude nanodiamond dispersion composition containing nanodiamond particles and a dispersion medium to centrifugation, separating a supernatant obtained in the centrifugation into a plurality of layers to obtain nanodiamond dispersion compositions each corresponding to each of the plurality of layers, and observing one or more of the nanodiamond dispersion compositions obtained in the separating with a microscope to obtain a classified and purified nanodiamond dispersion composition in which the number of nanodiamond particles having a particle size of 20 nm or greater in a microscopic field of view of 1 µm² is smaller than the number of nanodiamond particles having a particle size of 20 nm or greater in a microscopic field of view of 1 µm² in the crude nanodiamond dispersion composition.

### Centrifugation

In the centrifugation, a crude nanodiamond dispersion composition including nanodiamond particles and a dispersion medium is subjected to centrifugation. The crude nanodiamond dispersion composition includes a dispersion medium and nanodiamond particles dispersed in the dispersion medium. The crude nanodiamond dispersion composition to be subjected to the centrifugation preferably does not contain various precipitates such as precipitates of nanodiamond.

The crude nanodiamond dispersion composition includes coarse nanodiamond particles. The coarse nanodiamond particles in the crude nanodiamond dispersion composition have a size of 20 nm or greater. In the present specification, nanodiamond particles having a particle size of 20 nm or greater may be referred to as "coarse particles". The coarse particles may be primary particles of nanodiamond or may be secondary particles in which a plurality of the primary particles are aggregated (agglutinated). In the present specification, the particle size of coarse particles is a size (maximum size) measured by a method of microscopic observation in the microscopic observation.

The conditions such as the rotational speed, centrifugal force, time, and the like of the centrifugation are not particularly limited, and the centrifugation may be performed by a known or commonly used method. The centrifugal force in the centrifugation is from 5000 to 100000 rpm, for example, and the duration of the centrifugation is from 1 to 30 minutes, for example.

When the crude nanodiamond dispersion composition is observed with a microscope, the number of coarse particles in a microscopic field of view of 1 µm² is larger than the number of coarse particles in the classified and purified nanodiamond dispersion composition obtained in the separation.

Performing the centrifugation yields a precipitated layer formed from precipitation of part of coarse particles contained in the crude nanodiamond dispersion composition and a supernatant containing dispersed nanodiamond particles. The supernatant contains the remainder of the coarse particles in a dispersed state. In the supernatant in a centrifuge tube after the centrifugation, the proportion of the nanodiamond particles tends to gradually decrease from the lowermost layer having the precipitated layer to the surface layer.

The nanodiamond particles in the crude nanodiamond dispersion composition has a median size (D50) of preferably 1 nm or greater and less than 20 nm, more preferably from 2 to 15 nm, and still more preferably from 3 to 10 nm.

The proportion of the nanodiamond particles contained in the crude nanodiamond dispersion composition is not limited to particular values. The proportion may be from 0.1 mass ppm to 10 mass%, for example.

### (Separation)

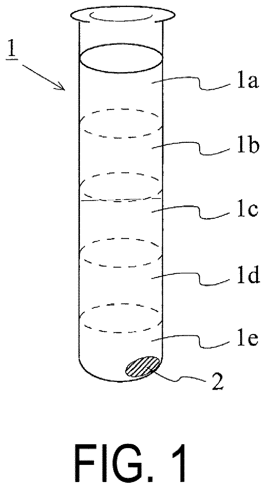

In the separation, the supernatant obtained in the centrifugation is separated (classified) into a plurality of layers, and nanodiamond dispersion compositions each corresponding to each of the layers are obtained. Specifically, as shown in FIG. 1 for example, a nanodiamond dispersion composition 1 present in the centrifugation tube is divided into compositions 1a to 1e evenly in a depth direction except for a precipitated layer 2, then the compositions are separately collected sequentially from the upper layer side by using a pipet or the like. The number of divisions of the dispersion composition may be selected as appropriate without limitation. The number is preferably 3 or more, more preferably 4 or more, excluding the precipitated layer. When the composition is separately collected, the division of the supernatant for collection does not need to be even in a depth direction. The division may be uneven in the depth direction, and the division may be appropriately set according to the required amount.

### (Microscope observation)

In the microscopic observation, one or more (preferably two or more) of the plurality of nanodiamond dispersion compositions (for example, the compositions 1a to 1e) obtained in the separation are observed with a microscope. Thus, a classified and purified nanodiamond dispersion composition is determined, in which the number of nanodiamond particles having a particle size of 20 nm or greater (coarse particles) in a microscopic field of view of 1 µm² is smaller than that in the crude nanodiamond dispersion composition. For the separated (classified) compositions obtained in the separation, the microscopic observation may be performed on all of the separated (classified) compositions or may be performed on some of the compositions (for example, the classified and purified nanodiamond dispersion composition) as necessary. Microscopic observation may also be performed on the precipitated layer.

The number of coarse particles in the classified and purified nanodiamond dispersion composition in a field of view of 1 µm² is preferably 20 or less, more preferably 10 or less, still more preferably 8 or less, still more preferably 5 or less, still more preferably 3 or less, still more preferably 1 or less, and particularly preferably 0.

The number of nanodiamond particles having a particle size of 15 nm or greater in the classified and purified nanodiamond dispersion composition in a field of view of 1 µm² is preferably 20 or less, more preferably 15 or less. The number of nanodiamond particles having a particle size of 15 nm or greater in the crude nanodiamond dispersion composition in a field of view of 1 µm² is preferably larger than that of the classified and purified nanodiamond dispersion composition.

The microscope is not limited to particular types as long as coarse particles can be confirmed when the coarse particles are present in the nanodiamond dispersion composition. For example, a known or commonly used electron microscope or atomic force microscope, such as a transmission electron microscope (TEM), a scanning electron microscope (SEM), or an atomic force microscope (AFM), may be used.

The microscopic observation is performed using the nanodiamond dispersion composition. When the microscopic observation is performed on the precipitated layer, the nanodiamond dispersion composition is prepared by adding a dispersion medium to the precipitated layer and subjecting the mixture to ultrasonic treatment or the like to re-disperse the nanodiamond particles in the precipitated layer.

In the present specification, the number of coarse particles in the nanodiamond dispersion composition in a microscopic field of view of 1 µm² may be measured as follows. First, the nanodiamond dispersion composition is applied to an elastic carbon support film and the dispersion medium is evaporated off. Next, an image is captured at any field of view of 1 µm² by using a microscope, for a group of nanodiamond particles dispersed and disposed on the elastic carbon support film. Then, the number of coarse particles in the field of view of 1 µm² is counted. By applying, drying and observing the composition in which nanodiamond particles are uniformly dispersed, the number of coarse particles, if present, can be measured within the area of 1 µm², which can be used as an index of the amount of coarse particles in the dispersion composition since the nanodiamond particles are uniformly dispersed and present on the substrate. To observe the field of view of 1 µm², a plurality of continuous smaller fields of view may be observed and combined.

The proportion of the nanodiamond particles contained in the nanodiamond dispersion composition subjected to the microscopic observation is not limited to particular values. It is preferably from 0.0001 to 10 mass%, more preferably from 0.0005 to 1 mass%, and still more preferably from 0.001 to 0.1 mass%. In a case where the nanodiamond dispersion composition contains coarse particles, a sufficient amount of coarse particles can be present in a field of view of 1 µm² with the proportion within the above range. In a case where the proportion of the nanodiamond particles contained in the crude nanodiamond dispersion composition or in each nanodiamond dispersion composition collected in the separation is outside the above range, the crude nanodiamond dispersion composition or each nanodiamond dispersion composition may be adjusted through concentration or dilution to have the proportion within the above range, and then the observation of the composition can be performed.

In the microscopic observation, the number of coarse particles in each nanodiamond dispersion composition is measured, and a nanodiamond dispersion composition in which the number of coarse particles in a field of view of 1 µm ² is smaller (in particular, 20 or less) than that in the crude nanodiamond dispersion composition can be obtained as the classified purified nanodiamond dispersion composition. The crude nanodiamond dispersion composition includes a dispersion medium and nanodiamond particles dispersed in the dispersion medium.

A classified and purified nanodiamond dispersion composition in which mixing of coarse particles is reduced can be thus obtained through the centrifugation, the separation, and the microscopic observation. The production method may include other steps in addition to these steps.

The median size (D50) of the nanodiamond particles in the classified and purified nanodiamond dispersion composition is preferably 1 nm or greater and less than 200 nm, more preferably from 2 to 150 nm, and still more preferably from 3 to 100 nm. The median size of the nanodiamond particles may be measured by a known or common method, for example, by dynamic light scattering (DLS) analysis used in examples of the present application.

The proportion of the nanodiamond particles contained in the classified and purified nanodiamond dispersion composition is not limited to particular values. The proportion is from 0.1 mass ppm to 10 mass%, for example.

In the present specification, the proportion of the nanodiamond particles contained in the nanodiamond dispersion composition may be determined from the absorbance at 350 nm. When the proportion of the surface-modified nanodiamond particles is small (e.g., 2000 mass ppm or less), the proportion may be determined based on a detected amount of a compound modifying the surfaces of the surface-modified nanodiamond particles detected through high frequency inductively coupled plasma emission spectroscopy (ICP emission spectroscopy).

### (Nanodiamond Dispersion Composition)

The nanodiamond particles in the crude nanodiamond dispersion composition subjected to the treatment in the centrifugation and in the nanodiamond dispersion composition separately collected in the separation are not limited, and known or commonly used nanodiamond particles may be used. The nanodiamond particles may be nanodiamond particles whose surfaces are modified (surface-modified nanodiamond particles) or may be nanodiamond particles whose surfaces are not modified. Nanodiamond particles whose surfaces are not modified have hydroxy groups (-OH), carboxy groups (-COOH), and the like on the surfaces. As the nanodiamond particles, only one type may be used, or two or more types may be used. The nanodiamond particles preferably have excellent solubility or dispersibility in the same dispersion medium throughout the crude nanodiamond dispersion composition and the classified and purified nanodiamond dispersion composition.

The nanodiamond particles constituting the surface-modified nanodiamond preferably contain primary particles of nanodiamond. In addition, the ND particle constituting the surface-modified ND may contain a secondary particle in which a plurality of the primary particles is aggregated (agglutinated).

Examples of the compound modifying the surfaces of the nanodiamond particles in the surface-modified nanodiamond or the functional group directly involved in the surface modification include a silane compound, a phosphonate ion or a phosphonate residue, an amide group, a cation of a cationic surfactant, a group containing a polyglycerin chain, and a group containing a polyethylene glycol chain.

The compound or functional group modifying the surfaces of the nanodiamond particles in the surface-modified nanodiamond preferably includes an organic group, more preferably includes a group containing a polyglycerin chain or a group containing a polyoxyalkylene chain.

Examples of the group containing a polyglycerin chain include a group having a polyglyceryl group, and a group in which a hydrogen atom of a hydroxy group in at least a part of the polyglyceryl group is substituted with a monovalent organic group.

The group containing a polyglycerin chain is preferably a polyglycerin chain-containing surface-modifying group represented by Formula (1) shown below.

-(XC₃H₅)-(OC₃H₅)p-(YR¹)q (1)

In Formula (1), p represents an integer of 1 or more, and q represents an integer satisfying q = p + 2. X represents a divalent group, and a bond extending to the left from X in [XC₃H₅] binds to the nanodiamond particle. [YR¹] represents a terminal of the polyglycerin chain, Y represents a single bond or a divalent group, and R¹ represents a hydrogen atom or a monovalent organic group.

[XC₃H₅] in Formula (1) is represented by [-X-CH₂-C(-)H-CH₂-]. X in [XC₃H₅] binds to the nanodiamond particle, and two C atoms each bind to O in [OC₃H₅] or Y in [YR¹]. X in [XC₃H₅] represents a divalent group.

Examples of the divalent group include an amino group (-NR^{a}-), an ether bond (-O-), an ester bond (-C(=O)O-), a phosphinic acid group (-PH(=O)O-), a phosphonic acid group (-P(-OH)(=O)O-), a phosphoric acid ester (-O-P(=O)(OH)-O-), a sulfide bond (-S-), a carbonyl group (-C(=O)-), an amide group (-C(= O)-NR^{a}-), a urethane bond (-R^{a}H-C(=O)-O-), an imide bond (-C(=O)-NR^{a}-C(=O)-), a thiocarbonyl group (-C(=S)-), a siloxane bond (-Si-O-), a sulfuric acid ester group (-O-S(=O)₂-O-), a sulfonyl group (-S(=O)₂-O-), a sulfone group (-S(=O)₂-), a sulfoxide (-S(=O)-), and a group in which two or more of those listed above are bonded. In an asymmetric divalent group, the direction of the divalent group with respect to the nanodiamond side or the polyglycerin side is not limited. The above-described R^{a} represents a hydrogen atom or a monovalent organic group. Examples of the monovalent organic group represented by R^{a} include those exemplified and described as the monovalent organic group represented by R¹.

Of these, -NR^{a}-, -O-, -C(=O)O-, -PH(=O)O-, or -S- is preferable and -NR^{a}-, - O-, or -C(=O)O- is more preferable as the divalent group.

[OC₃H₅] with p in Formula (1) is a structure derived from glycerin represented by [-O-CH₂-C(-)H-CH₂-] and forms a polyglycerin chain together with [XC₃H₅]. p represents a repeating unit of [OC₃H₅] and is an integer of 1 or more, preferably from 3 to 20, more preferably from 5 to 15. p may be the same or different in the group containing a plurality of polyglycerin chains.

In Formula (1), [YR¹] represents a terminal of the polyglycerin chain and bonds to C in [XC₃H₅] or C in [OC₃H₅]. R¹ represents a hydrogen atom or a monovalent organic group.

Y in [YR¹] represents a single bond or a divalent group, and examples of the divalent group include the preceding divalent groups exemplified and described as X in [XC₃H₅]. Of these, Y is preferably -NR^{a}-, -O-, -C(=O)O-, -O-C(=O)-, -PH(=O)O-, - O-P(=O)(OH)-O-, -S-, -O-S(=O)₂-O-, or -O-S(=O)₂-, more preferably -NR^{a}- or -O-. X in [XC₃H₆] and Y in [YR¹] may be the same or different. The plurality of [YR¹] may be the same or different. Y in [YR¹] may be the same or different in the group containing a plurality of polyglycerin chains. q represents an integer of 3 or more, and the value thereof depends on the value of p and satisfies q = p + 2. q may be the same or different in the group containing a plurality of polyglycerin chains.

Examples of R¹ (monovalent organic group) include a substituted or unsubstituted hydrocarbon group (monovalent hydrocarbon group), a substituted or unsubstituted heterocyclic group (monovalent heterocyclic group), and a group in which two or more of these groups are bonded. The bonded groups may be directly bonded or may be bonded via a linking group. Examples of the linking group include an amino group, an ether bond, an ester bond, a phosphinic acid group, a sulfide bond, a carbonyl group, an organic group-substituted amide group, an organic group-substituted urethane bond, an organic group-substituted imide bond, a thiocarbonyl group, a siloxane bond, and a group in which two or more of those listed above are bonded.

Examples of the hydrocarbon group of the monovalent organic group include, for example, an aliphatic hydrocarbon group, an alicyclic hydrocarbon group, an aromatic hydrocarbon group, and a group in which two or more of those listed above are bonded.

Examples of the aliphatic hydrocarbon group include an alkyl group, an alkenyl group, and an alkynyl group. Examples of the alkyl group include a C₁₋₂₂ alkyl group (preferably a C₂₋₂₀ alkyl group, more preferably a C₃₋₁₈ alkyl group), such as a methyl group, an ethyl group, a propyl group, an isopropyl group, a butyl group, a hexyl group, an octyl group, an isooctyl group, a decyl group, or a dodecyl group. Examples of the alkenyl group include a C₂₋₂₂ alkenyl group (preferably a C₄₋₂₀ alkenyl group, more preferably a C₈₋₁₈ alkenyl group), such as a vinyl group, an allyl group, a methallyl group, a 1-propenyl group, an isopropenyl group, a 1-butenyl group, a 2-butenyl group, a 3-butenyl group, a 1-pentenyl group, a 2-pentenyl group, a 3-pentenyl group, a 4-pentenyl group, or a 5-hexenyl group. Examples of the alkynyl group include a C₂₋₂₂ alkynyl group (preferably a C₄₋₂₀ alkynyl group, more preferably a C₈₋₁₈ alkynyl group), such as an ethynyl group or a propynyl group.

Examples of the alicyclic hydrocarbon group include: a C₃₋₁₂ cycloalkyl group, such as a cyclopropyl group, a cyclobutyl group, a cyclopentyl group, a cyclohexyl group, or a cyclododecyl group; a C₃₋₁₂ cycloalkenyl group, such as a cyclohexenyl group; and a C₄₋₁₅ crosslinked cyclic hydrocarbon group, such as a bicycloheptanyl group or a bicycloheptenyl group.

Examples of the aromatic hydrocarbon group include a C₆₋₁₄ aryl group (in particular, a C₆₋₁₀ aryl group), such as a phenyl group or a naphthyl group.

Examples of the group in which an aliphatic hydrocarbon group and an alicyclic hydrocarbon group are bonded include a cyclohexylmethyl group and a methylcyclohexyl group. Examples of the group in which an aliphatic hydrocarbon group and an aromatic hydrocarbon group are bonded include a C₇₋₁₈ aralkyl group (in particular, a C₇₋₁₀ aralkyl group), such as a benzyl group or a phenethyl group, a C₆₋₁₀ aryl-C₂₋₆ alkenyl group, such as a cinnamyl group, a C₁₋₄ alkyl-substituted aryl group, such as a tolyl group, and a C₂₋₄ alkenyl-substituted aryl group, such as a styryl group.

The hydrocarbon group in the substituted or unsubstituted hydrocarbon group is preferably an alkyl group, more preferably an alkyl group having from 1 to 18 carbon atoms, still more preferably an alkyl group having from 1 to 6 carbon atoms, and particularly preferably an ethyl group, a propyl group, a butyl group, or a hexyl group.

The monovalent organic group may have a substituent. Examples of the substituent include: a halogen atom, such as a fluorine atom, a chlorine atom, a bromine atom, or an iodine atom; a hydroxy group; a mercapto group; a carboxy group; an amino group; an acyl group; an alkoxy group; and an azide group. The monovalent organic group may have an ionic form.

Specific examples of [YR¹] include OH, NH₂, CH₃, an alkoxy group, an acyl group, a mono or dialkylamino group, a mono or dialkenylamino group, an alkylamide group, an alkenylamide group, a quaternary ammonium-substituted alkoxy group, a chlorine-substituted alkoxy group, a polyalkylene oxide group, a 1-(1,2,3-triazolyl) group, and a 4- or 5-substituted 1-(1,2,3-triazolyl) group.

The surface-modifying group having a polyglyceryl group (polyglyceryl group-containing surface-modifying group) has a hydroxy group on the polyglycerin chain. The surface-modified nanodiamond having the polyglyceryl group-containing surface-modifying group may be formed by ring-opening polymerization of glycidol directly on nanodiamond particles. The nanodiamond particles have a hydroxy group, a carboxy group, or an amino group generated in the production process, and the surface of the nanodiamond can be modified with a polyglyceryl group by reacting these functional groups with glycidol. In the ring-opening polymerization of glycidol, another epoxy compound (glycidyl trimethyl ammonium chloride, epichlorohydrin, etc.), an alkylene oxide, or the like may be copolymerized.

The surface-modified nanodiamond having the polyglyceryl group-containing surface-modifying group may also be formed by ring-opening polymerization of glycidol on nanodiamond particles whose surfaces are introduced with a functional group containing active hydrogen. The functional group containing active hydrogen is not limited to particular groups. Examples thereof include an amino group, a hydroxy group, a carboxy group, a mercapto group (thiol group), a phosphinic acid group, and a sulfonyl group. The ring-opening polymerization of glycidol on the nanodiamond particles whose surfaces are introduced with a functional group containing active hydrogen may be performed in the same manner as the ring-opening polymerization of glycidol on the nanodiamond particles described above.

The surface-modified nanodiamond having a group in which the hydrogen atom of a hydroxy group in at least a part of the polyglyceryl group is substituted with a monovalent organic group may be produced, for example, by reacting a surface-modified nanodiamond having a polyglyceryl group with an alcohol, an isocyanate ester, a carboxylic acid chloride, a carboxylic acid, a carboxylic acid ester, an acid anhydride, a sulfonic acid chloride, an epoxy compound (an epoxy compound other than glycidol), or the like.

For example, when an alcohol is used, the surface-modified nanodiamond is formed by reacting a surface-modified nanodiamond having a polyglyceryl group and the alcohol to cause dehydration condensation and form an ether bond. When an isocyanate ester is used, the surface-modified nanodiamond is formed by reacting a surface-modified nanodiamond having a polyglyceryl group and the isocyanate ester to add the isocyanate group in the isocyanate ester and the hydroxy group described above and form a urethane bond (carbamoyl group). When a carboxylic acid chloride is used, the surface-modified nanodiamond is formed by reacting a surface-modified nanodiamond having a polyglyceryl group and the carboxylic acid chloride to form an ester bond. When the carboxylic acid or acid anhydride is used, the reaction may be progressed in the presence of a condensing agent. Examples of the condensing agent include dicyclohexylcarbodiimide (DCC), 1-ethyl-3-(3-dimethylaminopropyl)carbodiimide hydrochloride (EDC), and 4-(4,6-dimethoxy-1,3,5-triazin-2-yl)-4-methylmorpholinium chloride (DMT-MM).

The reaction with the surface-modified nanodiamond having a polyglyceryl group may be carried out in a solvent. Examples of the solvent include organic solvents. The reaction may be performed, for example, by adding a catalyst to the nanodiamond particles in an inert gas atmosphere and stirring the mixture at room temperature. The catalyst is preferably a basic catalyst. Examples of the basic catalyst include a tertiary amine such as triethylamine, pyridine, dimethylaminopyridine, and triphenylphosphine. Note that when the basic catalyst is a liquid, the basic catalyst may be used as the reaction solvent.

The surface-modified nanodiamond having a polyglyceryl group may be produced by using a commercially available product. Examples of the commercially available product include trade name "DINNOVARE" (available from DAICEL CORPORATION) and trade name "NanoAmando" (available from NanoCarbon Research Institute Ltd.). The aqueous dispersion to be subjected to the centrifugation using the surface-modified nanodiamond having a polyglyceryl group may be produced based on the method described in JP 2010-248023 A.

The number-average degree of polymerization of glycerin in the polyglycerin chain is preferably from 1 to 100, more preferably from 2 to 40, and still more preferably from 3 to 20. When the number-average degree of polymerization is large, the repulsive force between the nanodiamond particles sufficiently acts, which can further improve the dispersibility of the nanodiamond particles in the dispersion composition. When the number-average degree of polymerization is 100 or less, entanglement of polyglycerin chains between the nanodiamond particles is reduced, which can further improve the dispersibility of the nanodiamond particles in the dispersion composition. The number-average degree of polymerization is defined as the number of glycidol units constituting a polyglycerin chain in a group bonded to one surface functional group of the raw material nanodiamond. The number of surface functional groups of the raw material nanodiamond may be obtained by element analysis or acid number measurement on the raw material nanodiamond, or by these techniques in combination.

Specific examples of the polyoxyalkylene chain include a polyethylene glycol chain, a polypropylene glycol chain, a polytetramethylene glycol chain, and a polybutylene glycol chain. In each surface-modifying group, the polyoxyalkylene chain may be composed of only one type of oxyalkylene, or composed of two or more types of oxyalkylenes. Examples of the polyoxyalkylene chain composed of two or more types of oxyalkylenes include a polyethylene glycol-polypropylene glycol chain. In a case where the polyoxyalkylene chain is composed of two or more oxyalkylenes, the bonding form of the two or more oxyalkylenes may be a random, alternating, or block form.

The polyoxyalkylene chain has a number-average molecular weight as a polyoxyalkylene of preferably from 100 to 10000, more preferably from 200 to 5000, still more preferably from 300 to 4000, still more preferably from 400 to 2500, and particularly preferably from 500 to 3000.

The average degree of polymerization (number-average degree of polymerization) of the oxyalkylene groups in the polyoxyalkylene chain is preferably from 2 to 50, more preferably from 4 to 45, even more preferably from 6 to 40. When the average degree of polymerization is 2 or more, the steric hindrance between the surface-modifying groups increases, and dispersion in the nanodiamond dispersion composition is facilitated. When the average degree of polymerization is 50 or less, entanglement of the surface-modifying groups is reduced, and dispersion in the nanodiamond dispersion composition is facilitated. In addition, properties as a diamond material are less likely to be impaired.

The polyoxyalkylene chain may have a structure in which a terminal is ended with an aliphatic hydrocarbon group. That is, the hydrogen atom in the hydroxy group at one of the terminals of the polyoxyalkylene chain may be substituted with an aliphatic hydrocarbon group.

The aliphatic hydrocarbon group with which the terminal of the polyoxyalkylene chain is ended is preferably an aliphatic hydrocarbon group having from 1 to 10 carbon atoms, more preferably an aliphatic hydrocarbon group having from 1 to 6 carbon atoms. Examples of the aliphatic hydrocarbon group having from 1 to 10 carbon atoms include a linear or branched alkyl group, such as a methyl group, an ethyl group, a propyl group, an isopropyl group, a butyl group, an isobutyl group, an s-butyl group, a t-butyl group, a pentyl group, a hexyl group, a heptyl group, an octyl group, a 2-ethylhexyl group, or a decyl group; a linear or branched alkenyl group, such as a vinyl or allyl group; and an alkynyl group, such as an ethynyl group or a propynyl group. Among these, a linear or branched alkyl group is preferred.

The polyoxyalkylene chain may be bonded to the nanodiamond particle via a single bond or via a linking group. As the linking group, a group containing a siloxane bond (-O-Si-) is preferred. In the siloxane bond, the oxygen atom is preferably bonded to the nanodiamond particle. The surface-modified nanodiamond in which the polyoxyalkylene chain is bonded to the nanodiamond particle via a group containing a siloxane bond can be easily produced. That is, it can be easily produced by reacting a compound (silane coupling agent) having a polyoxyalkylene chain at one end and an alkoxysilyl group at the other end with nanodiamond particles having a hydroxy group on their surfaces.

The nanodiamond particles in the present disclosure may be a positive ζ potential nanodiamond (powder) or a negative ζ potential nanodiamond (powder).

As the nanodiamond particles or surface-modified nanodiamond used in the above production method, a detonation nanodiamond (that is, nanodiamond produced by a detonation method) or a high-pressure high-temperature nanodiamond (that is, nanodiamond produced by a high-pressure high-temperature method) may be used, for example. Of these, a detonation nanodiamond is preferred in that dispersibility in a dispersion medium is even better, that is, in that primary particles have a particle size of a single-digit nanometer.

Examples of the detonation nanodiamond include an air-cooled detonation nanodiamond (that is, nanodiamond produced by an air-cooled detonation method) and a water-cooled detonation nanodiamond (that is, nanodiamond produced by a water-cooled detonation method).

In the nanodiamond, defects having fluorescent properties or magnetic properties, such as nitrogen-deficient centers (NV centers) and silicon-deficient centers (SiV centers), may be present in the diamond crystal structure.

The dispersion medium is a medium for dispersing the nanodiamond particles, and examples of the dispersion medium include water, organic solvents, and ionic liquids. As the dispersion medium, only one type or two or more types may be used. As the dispersion medium, water is preferred from the viewpoint of excellent dispersibility of the surface-modified nanodiamond having a group containing a polyglycerin chain or a polyoxyalkylene chain.

Examples of the organic solvent include: aliphatic hydrocarbons (in particular, linear saturated aliphatic hydrocarbons), such as hexane, heptane, and octane; aromatic hydrocarbons, such as benzene, toluene, and xylene; cycloaliphatic hydrocarbons, such as cyclohexane and methylcyclohexane; aprotic polar solvents, such as dimethylformamide (DMF), dimethylacetamide, N-methylpyrrolidone, and dimethylsulfoxide; halogenated hydrocarbons, such as chloroform, dichloromethane, dichloroethane, carbon tetrachloride, chlorobenzene, and trifluoromethylbenzene; chain or cyclic ethers, such as diethyl ether, diisopropyl ether, dimethoxyethane, tetrahydrofuran (THF), and dioxane; esters, such as ethyl acetate and butyl acetate; chain ketones, such as methyl ethyl ketone (MEK) and methyl isobutyl ketone; nitriles, such as acetonitrile; and alcohols, such as methanol, ethanol, 2-propanol, 1-propanol, butanol, ethylene glycol, and glycerin.

The proportion of the dispersion medium contained in the nanodiamond dispersion composition is, for example, from 90 to 99.9999 mass%. It is to be noted that the upper limit is 100 mass%.

The nanodiamond dispersion composition may be composed only of the nanodiamond particles and the dispersion medium or may contain an additional component. Examples of the additional component include surfactants, thickeners, coupling agents, dispersants, rust inhibitors, corrosion inhibitors, freezing point depressants, antifoaming agents, antiwear additives, antiseptics, and colorants. The proportion of the additional component to the total amount of the nanodiamond dispersion composition is, for example, 30 mass% or less, preferably 20 mass% or less, still more preferably 10 mass% or less, still more preferably 5 mass% or less, and particularly preferably 1 mass% or less. Therefore, the total proportion of the nanodiamond particles and the dispersion medium (particularly water) to the total amount of the nanodiamond dispersion composition is, for example, 70 mass% or greater, preferably 80 mass% or greater, more preferably 90 mass% or greater, still more preferably 95 mass% or greater, and particularly preferably 99 mass% or greater. In particular, with the production method of the present disclosure, presence of unnecessary components, such as an organic solvent and other components (polyoxyalkylene and the like), can be suppressed when the dispersion medium is water, and thus the above-described proportion can be achieved.

The classified and purified nanodiamond dispersion composition may be preferably used, for example, as an additive for a composite material that imparts properties (e.g., mechanical strength, high refractive index, thermal conductivity, insulating properties, antioxidant properties, crystallization promoting action, and dendrite reduction action) of fine nanodiamond particles to a resin or the like (e.g., a thermosetting or photocurable resin or a thermoplastic resin). A composition obtained by adding the nanodiamond dispersion composition to a resin may be preferably used as, for example, a functional hybrid material, a thermally functional (e.g., heat resistant, heat storing, thermo-electrically conductive, and heat insulating) material, a photonic material (e.g., an organic EL element, an LED, a liquid crystal display, and an optical disk), a bio/biocompatible material, a coating material, a film material (e.g., a hard coating film for touch screens and various displays, and a thermal barrier film), a sheet material, a screen material (e.g., a transmission type transparent screen), a filler material (e.g., a filler for heat radiation or for improving mechanical properties), a heat resistant plastic substrate material (e.g., a substrate for flexible displays), and a material for lithium ion batteries. In addition, the classified and purified nanodiamond dispersion composition may also be used as an antifriction agent or a lubricant to be applied to medical applications, sliding parts of machine parts (e.g., automobiles and aircraft), and the like. In particular, since mixing of coarse particles is reduced in the classified and purified nanodiamond dispersion composition, the composition can be applied to a living body in which mixing of coarse particles is not allowed.

Each aspect disclosed in the present specification can be combined with any other feature disclosed herein. Note that each of the configurations, combinations thereof, or the like in each of the embodiments are examples, and additions, omissions, replacements, and other changes to the configurations may be made as appropriate without departing from the spirit of the present disclosure. In addition, each aspect of the invention according to the present disclosure is not limited by the embodiments or the following examples but is limited only by the claims.

### Examples

An embodiment of the present invention will be described in further detail below based on examples.

### Production Example 1 (Production of Surface-Modified Nanodiamond 1 Having Polyglyceryl Group)

A surface-modified nanodiamond 1 having a polyglyceryl group was produced by the following method.

### <Preparation of Dried Nanodiamond>

A nanodiamond ND4 having an average particle size of 4 nm (trade name "NanoAmando (registered trade mark) B", available from NanoCarbon Research Institute Ltd.) was placed in a 30 mL eggplant-shaped flask and dried at a temperature of 50° C for 30 minutes under a high vacuum (0.09 mmHg) to obtain a black powder.

### <Introduction of Polyglyceryl Group into Surface Functional Group>

The dried ND4 (5.00 mg) was placed in a glass reaction vessel, and 2.5 µL of pyridine and then 1.2 mL of glycidol were added under an argon atmosphere, then the obtained material was stirred at 70°C for 3 hours. The reaction liquid was poured into a mixed liquid of methanol and chloroform (1 : 5), then centrifugation (15000 rpm, 10 minutes, 20°C) was performed to remove the supernatant. Next, a mixed liquid of methanol and chloroform (1 : 3) was added to the precipitate, and stirring dispersion and centrifugation (15000 rpm, 10 minutes, 20°C) were performed to remove the supernatant. Next, a mixed liquid of methanol and chloroform (1 : 1) was added to the precipitate, and stirring dispersion and centrifugation (15000 rpm, 10 min, 20°C) were repeated twice to remove the supernatant. Next, methanol was added to the precipitate then subjected to stirring dispersion, and centrifugation (15000 rpm, 10 minutes, 20°C) was performed for the fifth time to obtain a black precipitate. The precipitate was dispersed again in methanol and filtered through a membrane filter having a pore size of 100 µm to obtain 5.14 mg of a blackish brown solid. When the diffuse reflection IR spectrum of this material was measured, a peak originating from the nanodiamond skeleton near 2920 cm⁻¹, a peak originating from the hydroxy group of a polyglyceryl group near 3380 cm⁻¹, and a peak originating from the ether bond of the polyglyceryl group near 1130 cm⁻¹ were observed. The results of elemental analysis were C : 87.02%, H : 1.97%, N : 2.24%, and O : 8.82%, from which it was found that 9.7 wt.% of polyglycerin chain was introduced into the raw material ND4, and from the acid number of the raw material ND4 being 31. 9 KOHmg/g, the average degree of polymerization of polyglycerin chain per acidic functional group was determined to be 2.3-mer.

### <Dispersibility>

The product having a polyglyceryl group obtained above was dispersed in pure water at a concentration of 0. 25 mg/mL under ultrasonic irradiation, and the dispersion was filtered through a membrane filter having a pore size of 100 nm to obtain a colorless and transparent filtrate. The undispersed black solid filtered off on the membrane filter was washed 10 times with 1 mL of water, dried under vacuum, and weighed, then it was found that 0.19 mg/mL of the product was dispersed in the colorless transparent filtrate. This uniform dispersion was allowed to stand at room temperature for one month, but no precipitation occurred and the dispersion state was stable.

### Example 1

An aqueous dispersion of the surface-modified nanodiamond 1 having a polyglyceryl group obtained in Production Example 1 (D50: 4.5 nm, proportion of nanodiamond particles: 1.0 mass%, number of coarse particles in visual field of 1 µm²: more than 20) in an amount of 15 mL was placed in a centrifuge tube and subjected to a centrifugation treatment by using a centrifuge machine (classification operation). The rotation speed in this centrifugation treatment was 30000 rpm, and the duration of the centrifugation was 12 minutes.

A precipitated layer was observed at the bottom of the centrifuge tube after the centrifugation treatment. As shown in FIG. 1, the centrifuge tube was divided into five equal parts in a height direction in terms of appearance, and the nanodiamond dispersion compositions 1a to 1e were sequentially separated and collected from the top of the supernatant, and finally collected from the precipitated layer. The nanodiamond dispersion compositions 1a to 1e and the precipitated layer 2 were observed with a microscope. For the precipitated layer 2, an aqueous dispersion obtained by adding 1 mL of pure water and performing ultrasonic treatment for 10 minutes was observed with a microscope.

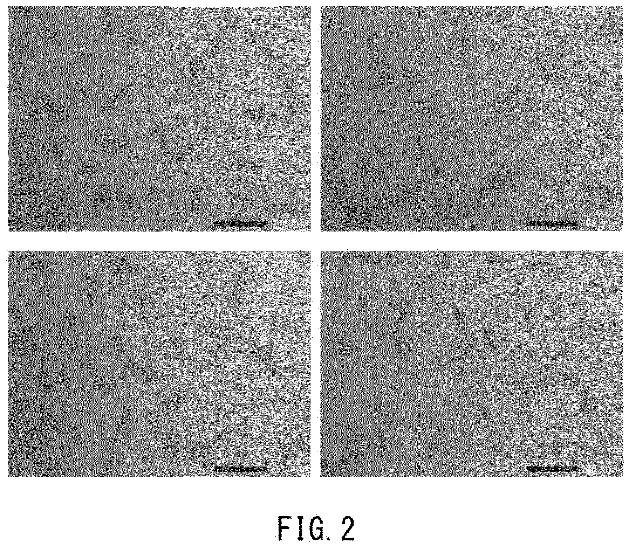

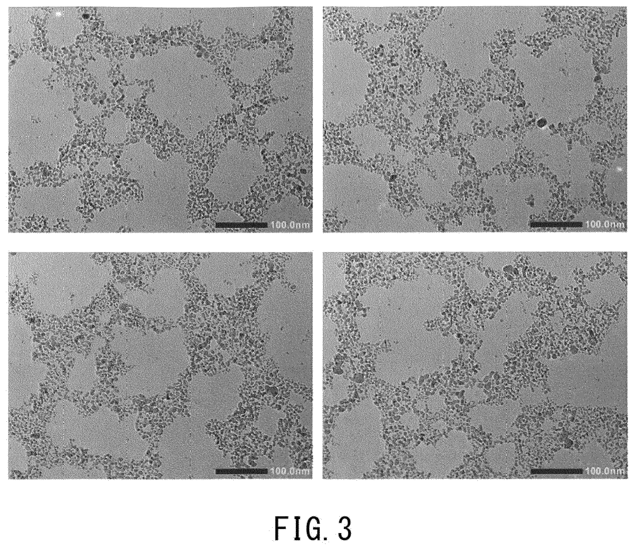

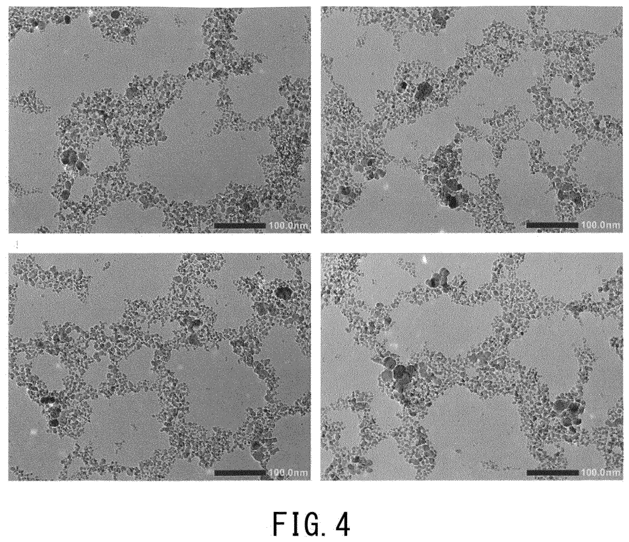

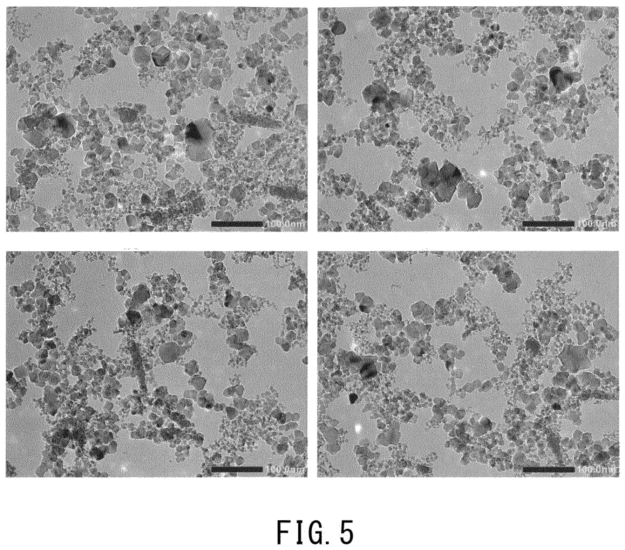

Specifically, the nanodiamond dispersion compositions were placed on an elastic carbon support membrane and air-dried overnight at room temperature. Then, an image of each measurement sample at a magnification of 100,000 times was captured using a transmission electron microscope (trade name "JEM-1400Plus", available from JEOL Ltd.). Four circumferentially adjacent fields of view of about 437 nm × 584 nm were combined to have a 1 µm² of field of view. FIG. 2 is a photomicrograph of the nanodiamond dispersion composition 1a. FIG. 3 is a photomicrograph of the nanodiamond dispersion composition 1c. FIG. 4 is a photomicrograph of the nanodiamond dispersion composition 1e. FIG. 5 is a photomicrograph of the aqueous dispersion of the precipitated layer 2.

As can be seen from FIG. 2, the number of coarse particles having a particle size of 20 nm or greater in the nanodiamond dispersion composition 1a in the field of view of 1 µm ² was 0, and the number of coarse particles having a particle size of 15 nm or greater was 6. As shown in FIG. 3, the number of coarse particles of 20 nm or greater and the number of coarse particles of 15 nm or greater in the nanodiamond dispersion composition 1c in the field of view of 1 µm² were 8 and 14, respectively. On the other hand, as shown in FIGS. 4 and 5, the number of coarse particles of 20 nm or greater in the nanodiamond dispersion composition 1e and in the aqueous dispersion of the precipitated layer 2 in the field of view of 1 µm² was more than 20.

### Production Example 2 (Production of Powder Obtained by Drying Nanodiamond Dispersion)

### [Nanodiamond Dispersion]

A nanodiamond dispersion was produced through the following processes of formation, purification, oxygen oxidation, hydrogenation, and disintegration.

In the formation, first, an electric detonator was attached to a molded explosive and then placed inside a pressure-resistant detonation vessel, and the vessel was sealed. The vessel was made of iron and had a capacity of 15 m³. A mixture, 0.50 kg, of trinitrotoluene (TNT) and cyclotrimethylenetrinitroamine, namely hexogen (RDX), was used as the explosive. The mass ratio of TNT and RDX (TNT/RDX) in the explosive is 50/50. Next, the electric detonator was triggered, and the explosive was detonated in the container. Then, the container was allowed to stand at room temperature for 24 hours to lower the temperatures of the container and its interior. After the cooling, a nanodiamond crude product (containing the aggregate of the nanodiamond particles and soot formed in the above detonation method), which adhered to the inner wall of the container, was scraped off with a spatula, and the nanodiamond crude product was thereby collected.

Next, the nanodiamond crude product obtained by performing the formation described above multiple times was subjected to an acid treatment in the purification. Specifically, a slurry obtained by adding 6 L of a 10% by mass hydrochloric acid to 200 g of the nanodiamond crude product was subjected to a heat treatment under reflux at normal pressure conditions for 1 hour. The heating temperature in this acid treatment was from 85 to 100°C. Then, after cooling, the solid (containing the nanodiamond agglutinates and soot) was washed with water by decantation. The solid was repeatedly washed with water by decantation until the pH of a precipitation liquid reached 2 from the low pH side.

Next, a solution oxidation treatment or a mixed acid treatment was performed in the purification. Specifically, a slurry was formed by adding 6 L of a 98 mass% sulfuric acid aqueous solution and 1 L of a 69 mass% nitric acid aqueous solution to the precipitation solution (containing the nanodiamond aggregates) obtained through decantation after the acid treatment, and then the slurry was subjected to a heat treatment under reflux at normal pressure conditions for 48 hours. The heating temperature in this oxidation treatment was from 140 to 160°C. Then, after cooling, the solid (containing the nanodiamond agglutinates) was washed with water by decantation. The initial supernatant liquid from the water washing was colored, and thus washing of the solid content with water by decantation was repeated until the supernatant liquid became visually transparent.

Next, a slurry was formed by adding 1 L of a 10 mass% sodium hydroxide aqueous solution and 1 L of a 30 mass% hydrogen peroxide aqueous solution to a precipitation solution (containing nanodiamond aggregates) obtained through decantation after the solution oxidation treatment, and subsequently, the slurry was heated under reflux for 1 hour at normal pressure conditions (alkali-hydrogen peroxide treatment). The heating temperature in this treatment was from 50 to 105°C. The supernatant was then removed by decantation after cooling. Then, the residual fraction was subjected to a drying treatment, thereby providing a dry powder. As a technique for the drying treatment, evaporation to dryness performed by using an evaporator was adopted.

The oxygen oxidation was then performed using a gas atmosphere furnace (trade name "Gas Atmosphere Tube Furnace KTF045N1", available from Koyo Thermo Systems Co., Ltd.). Specifically, 4.5 g of the nanodiamond powder obtained as described above was allowed to stand inside a furnace core tube of the gas atmosphere furnace, and nitrogen gas was continuously passed through the furnace core tube at a flow rate of 1 L/minute for 30 minutes. Then, the flowing gas was switched from nitrogen to a mixed gas of oxygen and nitrogen, and the mixed gas was continuously passed through the furnace core tube at a flow rate of 1 L/minute. The oxygen concentration in the mixed gas is 4 vol.%. After switching to the mixed gas, the temperature inside the furnace was raised to a temperature set for heating of 350°C. The temperature was raised at a rate of 10°C/min to 330°C, which was a temperature 20°C lower than the temperature set for heating, and then at a rate of 1°C/min from 330°C to the temperature set for heating of 350°C. Then, the nanodiamond powder in the furnace was subjected to an oxygen oxidation treatment while the temperature condition in the furnace was maintained at 350°C. The duration of the treatment was 3 hours. In this manner, the nanodiamond powder subjected to the oxygen oxidation or oxygen oxidation treatment was obtained.

Next, hydrogenation was performed using the gas atmosphere furnace described above. Specifically, the nanodiamond powder that had been subjected to oxygen oxidation was placed inside the gas atmosphere furnace, and nitrogen gas was continuously provided through at a flow rate of 1 L/minute for 30 minutes. Then, the flowing gas was switched from nitrogen to a mixed gas of hydrogen and nitrogen, and the mixed gas was continuously provided through the furnace core tube at a flow rate of 1 L/minute. The hydrogen concentration in the mixed gas was 2 vol.%. After switching to the mixed gas, the temperature inside the furnace was raised to a temperature set for heating of 600°C. The temperature rising rate was 10°C/minute. The hydrogen oxidation treatment was then performed on the nanodiamond powder in the furnace while maintaining the temperature condition inside the furnace at 600°C. The duration of the treatment was 5 hours. In this manner, a nanodiamond powder subjected to the hydrogen oxidation of hydrogen oxidation treatment was obtained.

The disintegration was then performed. Specifically, first, 0.9 g of the nanodiamond powder subjected to the hydrogenation and 29.1 ml of pure water were added to a 50 ml sample bottle and mixed to obtain about 30 ml of a slurry. Next, the slurry was subjected to a centrifugation (centrifugal force: 20000 xg for 10 minutes) and then to an ultrasonic treatment. In the ultrasonic treatment, the slurry was subjected to ultrasonic irradiation for 2 hours using an ultrasonic irradiator (trade name "Ultrasonic Cleaner AS-3", available from AS ONE Corporation). Thereafter, bead milling was performed using a bead milling apparatus (trade name "Parallel 4-Tube Sand Grinder Model LSG-4U-2L", available from Aimex Co., Ltd.). Specifically, 30 ml of the slurry after the ultrasonic irradiation and zirconia beads with a size of 30 µm were charged in a 100-ml vessel (available from Aimex Co., Ltd.), which was the mill vessel, and the vessel was sealed. Then, the apparatus was operated to perform bead milling. In this bead milling, the amount of zirconia beads that were charged was, for example, 33% of the capacity of the mill container, the rotational speed of the mill container was 2570 rpm, and the duration of the milling was 2 hours.

Next, the slurry or suspension subjected to the disintegration as described above was subjected to a centrifugation treatment (classification operation) with the use of a centrifuge. The centrifugal force in this centrifugation treatment was 20000 xg, and the duration of the centrifugation was 10 minutes. Next, 10 ml of supernatant of the nanodiamond-containing solution that had been subjected to this centrifugation treatment was collected. In this manner, a nanodiamond dispersion in which the nanodiamond was dispersed in pure water was obtained. This nanodiamond dispersion was 2.1% by mass in solid content concentration or nanodiamond concentration, with pH of 8.07.

### Particle size D50

For the nanodiamond dispersion obtained in this manner, the particle size distribution of the nanodiamond was measured by a dynamic light scattering method. Specifically, the particle size distribution of the nanodiamonds was measured by dynamic light scattering (non-contact backscattering) using an instrument (trade name "Zetasizer Nano ZS") available from Malvern Panalytical Ltd. The nanodiamond dispersion for the measurement was 2.1% by mass in solid content concentration or nanodiamond concentration, and subjected to ultrasonic irradiation with an ultrasonic cleaner. As the measurement results, the particle size D50 (median size) of the nanodiamond was 5.05 nm, and the particle size D90 of the nanodiamond was 7.54 nm.

### Zeta potential

The zeta potential for the nanodiamond particles contained in the nanodiamond dispersion obtained in the manner described above was measured by Laser Doppler type electrophoresis using an instrument (trade name "Zetasizer Nano ZS") available from Malvern Panalytical Ltd. The nanodiamond dispersion for the measurement was prepared by dilution with ultrapure water to a solid content concentration or a nanodiamond concentration of 0.2% by mass, followed by ultrasonic irradiation with an ultrasonic cleaner. The temperature when measuring the zeta potential was 25°C. As the measurement result, the zeta potential of the nanodiamond dispersion was 41.8 mV.

### Measurement of electric conductivity

For the nanodiamond dispersion collected in the manner described above, the electric conductivity was measured at a measurement temperature of 25°C using an electric conductivity measuring device (trade name "TWIN-COND B-771", from HORIBA, Ltd.). The nanodiamond dispersion for the measurement was 2.1% by mass in solid content concentration or nanodiamond concentration, and subjected to ultrasonic irradiation with an ultrasonic cleaner. As the measurement result, the electric conductivity of the nanodiamond dispersion was 25.2 µS/cm•wt%.

### [Nanodiamond Powder]

The nanodiamond dispersion obtained in the manner described above was evaporated to dryness with the use of an evaporator to obtain a nanodiamond powder. It was confirmed from the vacuum heating IR measurement that the surface of the nanodiamond powder has functional groups (e.g., -NH₂, -OH, -COOH, -PH(=O)OH, - SH, -SO₃H, -SO₂H, and -SiOH) that may react with glycidol.

Next, in the following Production Example 3, the nanodiamond obtained as described above was subjected to ring-opening addition polymerization with glycidol to produce a surface-modified nanodiamond modified with a group containing a polyglycerin chain at its surface. The surface-modified nanodiamond obtained in Production Example 3 was evaluated for the following items.

### Solid content concentration

For the surface-modified nanodiamond dispersion collected in the manner described above, the solid content concentration was measured. Specifically, a Teflon sheet was put on a beaker, several grams of the dispersion (sample) collected as described above, placed thereon, was treated with a 250°C sand bath for several hours, dried to some extent, and then subjected to vacuum drying at 70°C overnight, and the solid content concentration was determined from the weight of the remaining solid content.

### Particle size measurement

For the surface-modified nanodiamond dispersion obtained in the manner described above, the particle size distribution of the surface-modified nanodiamond was measured by a dynamic light scattering method. Specifically, the particle size distribution of the surface-modified nanodiamond was measured by a dynamic light scattering method (non-contact backscattering method) with the use of an instrument (trade name "Nanotrac Wave II" from MicrotracBEL).

### Modification ratio of modifying group

The ratio (modifying group weight/ND weight) of modifying group to nanodiamond (ND) was determined with the use of TG/DTA (quartz pan, from 30 to 800°C, rate of temperature rise: 20°C/min) for the surface-modified nanodiamond (the solid of the dispersion dried) in the surface-modified nanodiamond dispersion obtained in the manner described above.

### Sodium nitrate aqueous solution mixing test

To the surface-modified nanodiamond dispersion obtained in the manner described above, a 0.5M-NaNO₃ aqueous solution was added such that the amount thereof was 20 times as large as that of the dispersion, and the presence or absence of turbidity or precipitation was observed.

### GPC measurement

The surface-modified nanodiamond dispersion obtained in the manner described above was subjected to a GPC measurement under the following conditions:
Analyzer: 10A from SHIMADZU CORPORATION
Column: Shodex SB-806 × 2 + 802.5 with guard
Column Temperature: 40°C
Eluent: 0.5M-NaNO₃ aqueous solution
Flow Rate: 0.6 mL/min
Detection: Shodex RI-101 (40°C) Porlarity (+) or UV254
Injection Volume: 50 µL
Sample Concentration: 0.5% (n=2 created, n=1 measured) (the sample obtained by mixing Milli-Q water in an amount equivalent to the obtained 1% aqueous solution to prepare a 0.5% aqueous solution and filtering the prepared solution through a 0.45 µm filter was used as an evaluation sample)
Reference Sample: Easi Vial PEG/PEO

### Production Example 3 (Production of Aqueous Dispersion of Surface-Modified Nanodiamond 2 Having Polyglyceryl Group)

Under a nitrogen atmosphere, a dispersion obtained by mixing 13.5 g of ethylene glycol and 0.5 g of the nanodiamond powder obtained in Production Example 2 was heated to 100°C. Into this dispersion, 13.5 g of glycidol was added dropwise over 4 hours while maintaining the temperature at 100°C, and after the completion of the dropwise addition, the mixture was subjected to aging for 10 hours at the same temperature. After the completion of the aging, the mixture was cooled to room temperature, and the same amount of water as the liquid reaction mixture was added to the liquid reaction mixture to stop the reaction. Thereafter, the liquid reaction mixture was purified with the use of a UF membrane (trade name "Amicon Bioseparations" from Millipore, made of polyether sulfone, molecular weight cut off: 30000). The purification was completed when the total dilution factor reached a million times by repetition of the permeation (solid-liquid separation with the use of a membrane)-dilution [addition of water to the remaining upper layer (valuables)]. A dispersion of the surface-modified nanodiamond 2 having a polyglyceryl group was thus obtained.

The solid content concentration of the surface-modified nanodiamond dispersion obtained as described above was measured and determined to be 1.97 wt.%. For the surface-modified nanodiamond dispersion obtained as described above, the particle size distribution of the surface-modified nanodiamond was measured by a dynamic light scattering method, with the result that the particle sizes D10, D50 (median size), and D90 were respectively 21 nm, 38 nm, and 68 nm. For the surface-modified nanodiamond in the surface-modified nanodiamond dispersion obtained as described above, the result of measuring the modification ratio of the modifying group was 0.9. Furthermore, as a result of performing a sodium nitrate aqueous solution mixing test on the surface-modified nanodiamond dispersion obtained as mentioned above, no turbidity or precipitation was observed.

### Example 2

The aqueous dispersion of the surface-modified nanodiamond 2 having a polyglyceryl group obtained in Production Example 3 (proportion of nanodiamond particles : 1.0 mass%, number of coarse particles in a field of view of 1 µm²: more than 20) was subjected to a centrifugation treatment (classification operation) in the same manner as in Example 1. A precipitated layer was observed at the bottom of the centrifuge tube after the centrifugation treatment. As shown in FIG. 1, the centrifuge tube was divided into five equal parts in a height direction in terms of appearance, and the nanodiamond dispersion compositions 1a to 1e were sequentially separated and collected from the top of the supernatant, and finally collected from the precipitated layer, in the same manner as in Example 1. The nanodiamond dispersion compositions 1a to 1e and the precipitated layer 2 were observed with a microscope. For the precipitated layer 2, an aqueous dispersion obtained by adding 1 mL of pure water and performing ultrasonic treatment for 10 minutes was observed with a microscope.

As a result, the number of coarse particles having a particle size of 20 nm or greater in the field of view of 1 µm² in the nanodiamond dispersion composition 1a was 0.

Hereinafter, variations of the invention according to the present disclosure will be described.

[Supplementary Note 1] A method for producing a nanodiamond dispersion composition including:
subjecting a crude nanodiamond dispersion composition containing nanodiamond particles and a dispersion medium to centrifugation;
separating a supernatant obtained in the centrifugation into a plurality of layers to obtain nanodiamond dispersion compositions each corresponding to each of the plurality of layers; and
observing one or more of the nanodiamond dispersion compositions obtained in the separating, using a microscope, to obtain a classified and purified nanodiamond dispersion composition in which the number of nanodiamond particles having a particle size of 20 nm or greater in a microscopic field of view of 1 µm² is smaller than the number of nanodiamond particles having a particle size of 20 nm or greater in a microscopic field of view of 1 µm² in the crude nanodiamond dispersion composition.

[Supplementary Note 2] The method for producing a nanodiamond dispersion composition according to supplementary note 1, in which the number of nanodiamond particles having a particle size of 20 nm or greater in the classified and purified nanodiamond dispersion composition is 20 or less (preferably 10 or less, more preferably 8 or less, still more preferably 5 or less, still more preferably 3 or less, still more preferable 1 or less, and particularly preferably 0).

[Supplementary Note 3] The method for producing a nanodiamond dispersion composition according to supplementary note 1 or 2, in which the number of nanodiamond particles having a particle size of 15 nm or greater in a field of view of 1 µm² in the classified and purified nanodiamond dispersion composition is 20 or less (preferably 15 or less).

[Supplementary Note 4] The method for producing a nanodiamond dispersion composition according to any one of supplementary notes 1 to 3, in which the nanodiamond particles in the crude nanodiamond dispersion composition has a median size (D50) of 1 nm or greater and less than 20 nm (preferably from 2 to 15 nm, more preferably from 3 to 10 nm).

[Supplementary Note 5] The method for producing a nanodiamond dispersion composition according to any one of supplementary notes 1 to 4, in which the crude nanodiamond dispersion composition contains the nanodiamond particles in a proportion of 0.1 mass ppm to 10 mass%.

[Supplementary Note 6] The method for producing a nanodiamond dispersion composition according to any one of supplementary notes 1 to 5, in which the number of divisions in the separation is 3 or more (preferably 4 or more), excluding a precipitated layer.

[Supplementary Note 7] The method for producing a nanodiamond dispersion composition according to any one of supplementary notes 1 to 6, in which, in the microscopic observation, two or more of the nanodiamond dispersion compositions obtained in the separation are observed with a microscope.

[Supplementary Note 8] The method for producing a nanodiamond dispersion composition according to any one of supplementary notes 1 to 7, in which the nanodiamond dispersion composition subjected to the observation contains the nanodiamond particles in a proportion of 0.0001 to 10 mass% (preferably 0.0005 to 1 mass%, more preferably 0.001 to 0.1 mass%).

[Supplementary Note 9] The method for producing a nanodiamond dispersion composition according to any one of supplementary notes 1 to 8, in which the nanodiamond particles in the classified and purified nanodiamond dispersion composition has a median size (D50) of 1 nm or greater and less than 200 nm (preferably from 2 to 150 nm, more preferably from 3 to 100 nm).

[Supplementary Note 10] The method for producing a nanodiamond dispersion composition according to any one of supplementary notes 1 to 9, in which the classified and purified nanodiamond dispersion composition contains the nanodiamond particles in a proportion of from 0.1 mass ppm to 10 mass%.

[Supplementary Note 11] The method for producing a nanodiamond dispersion composition according to any one of supplementary notes 1 to 10, in which the nanodiamond particles include nanodiamond particles whose surfaces are modified with a group including an organic group (preferably a group containing a polyglycerin chain and/or a polyoxyalkylene chain).

[Supplementary note 12] The method for producing a nanodiamond dispersion composition according to supplementary note 11, in which the group containing a polyglycerin chain is a group having a polyglyceryl group and/or a group in which the hydrogen atom in a hydroxy group in at least a part of the polyglyceryl group is substituted with a monovalent organic group.

[Supplementary note 13] The method for producing a nanodiamond dispersion composition according to supplementary note 11 or 12, in which the group containing a polyglycerin chain is a polyglycerin chain-containing surface-modifying group represented by Formula (1) shown below:

-(XC₃H₅)-(OC₃H₅)p-(YR¹)q (1)

where p represents an integer of 1 or more, q represents an integer satisfying q = p + 2, X represents a divalent group, the dangling bond extending to the left from X in [XC₃H₅] binds to the nanodiamond particle, [YR¹] represents a terminal of the polyglycerin chain, Y represents a single bond or a divalent group, and R¹ represents a hydrogen atom or a monovalent organic group.

[Supplementary Note 14] The method for producing a nanodiamond dispersion composition according to supplementary note 13, in which X is an amino group, an ether bond, an ester bond, a phosphinic acid group, a phosphonic acid group, a phosphoric acid ester, a sulfide bond, a carbonyl group, an amide group, a urethane bond, an imide bond, a thiocarbonyl group, a siloxane bond, a sulfuric acid ester group, a sulfonyl group, a sulfone group, a sulfoxide, or a group in which two or more of those listed above are bonded (preferably - NR^{a}-, -O-, -C(= O)O-, - PH(=O)O-, or -S-, more preferably -NR^{a}-, -O-, or -C(=O)O-, where R^{a} represents a hydrogen atom or a monovalent organic group).

[Supplementary Note 15] The method for producing a nanodiamond dispersion composition according to any one of supplementary notes 1 to 14, in which the dispersion medium contains water.

[Supplementary Note 16] A nanodiamond dispersion composition including nanodiamond particles whose surfaces are modified with a group containing a polyglycerin chain and/or a polyoxyalkylene chain, and water as a dispersion medium, wherein
the nanodiamond particles are dispersed in the water, and
the number of nanodiamond particles having a particle size of 20 nm or greater in a microscopic field of view of 1 µm² is 20 or less (preferably 10 or less, more preferably 8 or less, still more preferably 5 or less, still more preferably 3 or less, still more preferably 1 or less, and particularly preferably 0) when the nanodiamond dispersion composition is observed with a microscope.

[Supplementary Note 17] The nanodiamond dispersion composition according to supplementary note 16, in which the nanodiamond particles in the nanodiamond dispersion composition has a median size (D50) of 1 nm or greater and less than 200 nm (preferably from 2 to 150 nm, more preferably from 3 to 100 nm).

[Supplementary Note 18] The nanodiamond dispersion composition according to supplementary note 16 or 17, in which the nanodiamond dispersion composition contains the nanodiamond particles in a proportion of 0.1 mass ppm to 10 mass%.

[Supplementary Note 19] The nanodiamond dispersion composition according to any one of supplementary notes 16 to 18, in which the number of nanodiamond particles having a particle size of 15 nm or greater in a field of view of 1 µm² in the nanodiamond dispersion composition is 20 or less (preferably 15 or less).

[Supplementary Note 20] The nanodiamond dispersion composition according to any one of supplementary notes 16 to 19, in which the group containing a polyglycerin chain is a group having a polyglyceryl group and/or a group in which the hydrogen atom in a hydroxy group in at least a part of the polyglyceryl group is substituted with a monovalent organic group.

[Supplementary Note 21] The nanodiamond dispersion composition according to any one of supplementary notes 16 to 20, in which the group containing a polyglycerin chain is a polyglycerin chain-containing surface-modifying group represented by Formula (1) shown below:

-(XC₃H₅)-(OC₃H₅)p-(YR¹)q (1)

where p represents an integer of 1 or more, q represents an integer satisfying q = p + 2, X represents a divalent group, the dangling bond extending to the left from X in [XC₃H₅] binds to the nanodiamond particle, [YR¹] represents a terminal of the polyglycerin chain, Y represents a single bond or a divalent group, and R¹ represents a hydrogen atom or a monovalent organic group.

[Supplementary Note 22] The nanodiamond dispersion composition according to supplementary note 21, wherein X is an amino group, an ether bond, an ester bond, a phosphinic acid group, a phosphonic acid group, a phosphoric acid ester, a sulfide bond, a carbonyl group, an amide group, a urethane bond, an imide bond, a thiocarbonyl group, a siloxane bond, a sulfuric acid ester group, a sulfonyl group, a sulfone group, a sulfoxide, or a group in which two or more of those listed above are bonded (preferably -NR^{a}-, -O-, -C(=O)O-, -PH(=O)O-, or -S-, more preferably -NR^{a}-, -O-, or -C(=O)O-, where R^{a} represents a hydrogen atom or a monovalent organic group).

### Industrial Applicability

With the method for producing a nanodiamond dispersion composition according to the present disclosure, a nanodiamond dispersion composition having the reduced number of coarse particles mixed in the dispersion composition can be easily obtained. In addition, the production method does not require a high-temperature treatment of the nanodiamond dispersion composition, and thus the method can produce a nanodiamond dispersion composition with the reduced number of coarse particles mixed in the composition even when the nanodiamond dispersion composition has an organic part. Thus, the resulting nanodiamond dispersion composition can be applied to a living body in which mixing of coarse particles is not allowed.

### Reference Signs List

1, 1a to 1e Nanodiamond dispersion composition
2 Precipitated layer

## Claims

1. A method for producing a nanodiamond dispersion composition comprising:
subjecting a crude nanodiamond dispersion composition containing nanodiamond particles and a dispersion medium to centrifugation;
separating a supernatant obtained in the centrifugation into a plurality of layers to obtain nanodiamond dispersion compositions each corresponding to each of the plurality of layers; and
observing one or more of the nanodiamond dispersion compositions obtained in the separating, using a microscope, to obtain a classified and purified nanodiamond dispersion composition in which the number of nanodiamond particles having a particle size of 20 nm or greater in a microscopic field of view of 1 µm² is smaller than the number of nanodiamond particles having a particle size of 20 nm or greater in a microscopic field of view of 1 µm² in the crude nanodiamond dispersion composition.

2. The method for producing a nanodiamond dispersion composition according to claim 1, wherein the number of nanodiamond particles having a particle size of 20 nm or greater in the classified and purified nanodiamond dispersion composition is 20 or less.

3. The method for producing a nanodiamond dispersion composition according to claim 1 or 2, wherein the nanodiamond particles includes nanodiamond particles whose surfaces are modified with a group containing a polyglycerin chain and/or a polyoxyalkylene chain.

4. The method for producing a nanodiamond dispersion composition according to any one of claims 1 to 3, wherein the dispersion medium contains water.

5. A nanodiamond dispersion composition comprising:
nanodiamond particles whose surfaces are modified with a group containing a polyglycerin chain and/or a polyoxyalkylene chain; and
water as a dispersion medium,
wherein
the nanodiamond particles are dispersed in the water, and
the number of nanodiamond particles having a particle size of 20 nm or greater in a microscopic field of view of 1 µm² is 20 or less when the nanodiamond dispersion composition is observed with a microscope.
